# EUROPÄISCHE PATENTSCHRIFT

(11) **EP 1 215 410 B1**
(45) Veröffentlichungstag und Bekanntmachung des Hinweises auf die Patenterteilung: **27.08.2003**
(21) Anmeldenummer: 01125714.4
(22) Anmeldetag: 27.10.2001
(51) Int. Cl.: F16D 1/09

(54) **Welle-Nabe-Verbindung**
Shaft - Hub connection
Joint arbre - moyeu

(30) Priorität: 16.12.2000 DE 10062866
(43) Veröffentlichungstag der Anmeldung: 19.06.2002
(73) Patentinhaber: GKN Walterscheid GmbH, 53797 Lohmar (DE)
(72) Erfinder: Schott, Wilhelm, Dipl.-Ing., 50996 Köln (DE)
(74) Vertreter: Harwardt, Günther, Dipl.-Ing.

(56) Entgegenhaltungen:
- US-A- 3 143 366
- US-A- 4 402 625
- US-A- 4 997 285

## Beschreibung

Die Erfindung betrifft eine Welle-Nabe-Verbindung umfassend
- eine Nabe
   mit einer ersten Stirnfläche und einer dazu parallel angeordneten zweiten Stirnfläche,
   mit einer sich zwischen den beiden Stirnflächen erstreckenden und auf einer Längsachse zentrierten Durchgangsbohrung, die einen ersten Bohrungsabschnitt aufweist,
- eine Stützscheibe mit einer durchgehenden Bohrung, die an der Nabe an dem der zweiten Stirnfläche nahen Ende des ersten Bohrungsabschnitts entlang der Längsachse unbeweglich gehalten ist,
- eine Welle
   mit einem Außenflächenabschnitt, der zum ersten Bohrungsabschnitt der Nabe passend ausgebildet ist und auf der Längsachse zentriert ist, und
   mit einer von einer Wellenstirnfläche ausgehenden und auf der Längsachse zentrierten Gewindebohrung und
- eine Spannschraube
   mit einem Kopf und einem Gewindeschaft, welcher von der zweiten Stirnfläche der Nabe ausgehend durch die Bohrung der Stützscheibe in die Gewindebohrung einschraubbar ist, und
wobei der erste Bohrungsabschnitt der Nabe und der darin aufnehmbare Außenflächenabschnitt der Welle so ausgebildet sind, daß zumindest ab einer bestimmten Eintauchtiefe der Welle in den ersten Bohrungsabschnitt ein dem Verspannen beider zueinander entgegenwirkender Reibwiderstand aufbaubar und/oder entgegenwirkender Formwiderstand vorhanden ist.

Eine solche Welle-Nabe-Verbindung ist in der US-A-4 402 625 beschrieben. Dabei ist mit der Stützscheibe eine Abdeckscheibe fest verbunden, so daß zwischen Stützscheibe und der Abdeckscheibe der Kopf der Spannschraube eingeschlossen ist. Es wird auf die Spannschraube im Lösesinne eingewirkt, stutzt sich diese über den Kopf und die Abdeckscheibe gegen einen Sicherungsring ab, der in dem zweiten Bohrungsabschnitt der Durchgangsbohrung der Nabe festgelegt ist. Dabei wird eine Kraft auf die Welle im Sinne des Herausdrückens aus dem ersten Bohrungsabschnitt ausgeübt. Für die Verbindung der Welle mit der Nabe müssen zunächst der Stützring und der Abdeckring montiert werden, wobei der Abdeckring mit dem Stützring fest zu verbinden ist. Der Abstützring und der Abdeckring sind zusammen mit der Spannschraube in die Nabe einzuführen, bis der Stützring zur Stufenfläche, die den ersten Bohrungsabschnitt begrenzt, zur Anlage gekommen ist. Danach ist diese Einheit in der Bohrung mittels des Sicherungsringes festzulegen.

Die DE-AS 2 031 124 betrifft eine Kupplung zur Befestigung einer Nabe auf einer Welle. Die Nabe weist eine Ausdrehung auf, in der eine konische Sitzfläche koaxial um eine Durchgangsbohrung der Nabe angeordnet ist. In der Durchgangsbohrung ist die Welle aufgenommen. Die Nabe ist im Bereich der konischen Sitzfläche durch die axiale Verspannung eines Druckringes, der mit einer entsprechend konischen Bohrung auf der Sitzfläche sitzt, verformbar. Zur axialen Verspannung dienen Kopfschrauben, die sich durch umfangsverteilte Durchgangsbohrungen des Druckringes hindurch in Gewindebohrungen der Nabe erstrecken. Zwischen Nabe und Druckring befinden sich auf dem Gewinde der Kopfschrauben jeweils zwei gegeneinander verspannte Muttern. Das Verspannen des Druckringes erfolgt dadurch, daß sich die Köpfe der Kopfschrauben beim Einschrauben in die Gewindebohrungen gegen den Druckring pressen. Beim Lösen drücken die beiden gegeneinander verspannten Muttern gegen den Druckring.

Die US 3 143 366 beschreibt eine Welle-Nabe-Verbindung mit einer Spannschraube. Die Nabe weist eine konische Bohrung auf, in der eine Welle mit einer entsprechend konischen Fläche aufgenommen ist. Die Nabe besitzt in ihrer Bohrung eine Stufe und die Welle eine Gewindebohrung. Die Kopfschraube liegt mit einem Bund gegen die Stufe und greift in eine zentrale Gewindebohrung der Welle ein. In der die Stufe bildenden Bohrung der Nabe ist von der Stufe entfernt ein Sicherungsring in eine Nut eingesetzt, so daß sich der Bund zwischen der Stufe und dem Sicherungsring befindet. Für das Verspannen von Welle und Nabe stützt sich der Band gegen die Stufe und für das Lösen von Welle und Nabe voneinander gegen den Sicherungsring ab.

Der Erfindung liegt daher die Aufgabe zugrunde, eine Welle-Nabe-Verbindung zu schaffen, die ein einfaches Lösen ohne zusätzliche Abziehwerkzeuge zuläßt.

Diese Aufgabe wird erfindungsgemäß dadurch gelöst, daß eine Mutter zwischen der Stützscheibe und der Wellenstirnfläche mit Spiel zur Stützscheibe auf dem Gewindeschaft der Spannschraube undrehbar festgelegt ist.

Der Vorteil bei dieser Lösung ist, daß die Spannschraube, die zur Verspannung der Verbindung genutzt wird, auch gleichzeitig zum Lösen derselben genutzt werden kann. Bei der Erstmontage muß zunächst eine Verbindung zwischen der Stützscheibe und der Spannschraube erzielt werden, indem die Spannschraube durch die Bohrung der Stützscheibe hindurchgeführt wird und danach die Mutter in die vorbestimmte Position auf dem Gewindeschaft der Spannschraube aufgeschraubt wird. Die Stützscheibe befindet sich dabei zwischen dem Kopf und der Mutter. Anschließend kann die Stützscheibe an der Nabe so festgelegt werden, daß sie in Axialrichtung, d. h. in Richtung der Längsachse, unverschieblich gehalten ist. Somit kann einerseits eine Verspannung der Nabe mit der Welle erfolgen, indem die Spannschraube im Sinne des Eintauchens in die Gewindebohrung der Welle eingeschraubt werden kann. Beim Herausschrauben kommt die Mutter, die auf dem Gewindeschaft festgelegt ist, gegen die Stützscheibe zur Anlage. Bei weiterem Drehen der Spannmutter erfolgt eine Abstützung der Spannschraube axial gegen die Stützscheibe und drückt die Welle mit ihrem Außenflächenabschnitt aus dem ersten Bohrungsabschnitt heraus, bzw. bewegt die Nabe von der Welle weg, da die Stützscheibe axial festgelegt ist.

Eine bevorzugte Ausgestaltung sieht vor, daß die Nabe einen von der zweiten Stirnfläche ausgehenden und zum ersten Bohrungsabschnitt durchmessermäßig vergrößerten zweiten Bohrungsabschnitt aufweist, so daß zwischen beiden Bohrungsabschnitten eine Stufenfläche gegeben ist, und daß die Stützscheibe im zweiten Bohrungsabschnitt einsitzt, gegen die Stufenfläche anliegt und durch Sicherungsmittel gehalten ist. Die Stützscheibe ist zusammen mit dem Kopf der Spannschraube in dem zweiten Bohrungsabschnitt aufgenommen. Der im Durchmesser zum ersten Bohrungsabschnitt vergrößerte zweite Bohrungsabschnitt ermöglicht ein einfaches Zentrieren eines Werkzeuges zum Betätigen der Schraube gegenüber dem Kopf der Spannschraube.

Zur Sicherung der Stützscheibe in dem zweiten Bohrungsabschnitt ist ein Sicherungsring vorgesehen, der in einer Sicherungsnut im zweiten Bohrungsabschnitt der Nabe gehalten ist.

Um zu gewährleisten, daß beim Lösen der Welle-Nabe-Verbindung sich keine Relativbewegung der Mutter zum Gewindeschaft ergibt, ist die Mutter als Kronmutter ausgebildet und durch einen Splint auf dem Gewindeschaft gegen Verlagerung gesichert.

Die spielfreie Verbindung zwischen dem ersten Bohrungsabschnitt der Nabe und dem darin aufnehmbaren Außenflächenabschnitt kann dadurch erreicht werden, der erste Bohrungsabschnitt der Nabe sich in Richtung zur zweiten Stirnfläche hin konisch verjüngt und der Außenflächenabschnitt der Welle entsprechend konisch ausgebildet ist. Alternativ ist es möglich, daß der erste Bohrungsabschnitt einen zur zweiten Stützfläche hin sich konisch verjüngenden Abschnitt und daran anschließend einen bis zur ersten Stirnfläche reichenden verzahnten Abschnitt mit zur Längsachse parallelen Zähnen konstanter Zahnhöhe aufweist und der Außenflächenabschnitt der Welle zu diesen passende Abschnitte aufweist.

Vorzugsweise findet die Welle-Nabe-Verbindung Anwendung bei einer Kupplung, wobei die Nabe Bestandteil der Kupplung ist und die Welle Teil einer Antriebswelle darstellt.

Zwei bevorzugte Ausführungsbeispiele der Erfindung sind anhand der Zeichnungen näher erläutert.

Es zeigt
- Figur 1: einen Längsschnitt durch eine erste Ausführungsform einer Welle-Nabe-Verbindung in Anwendung bei einer Reibkupplung und
- Figur 2: eine zweite Ausführungsform einer Welle-Nabe-Verbindung im Halblängsschnitt.

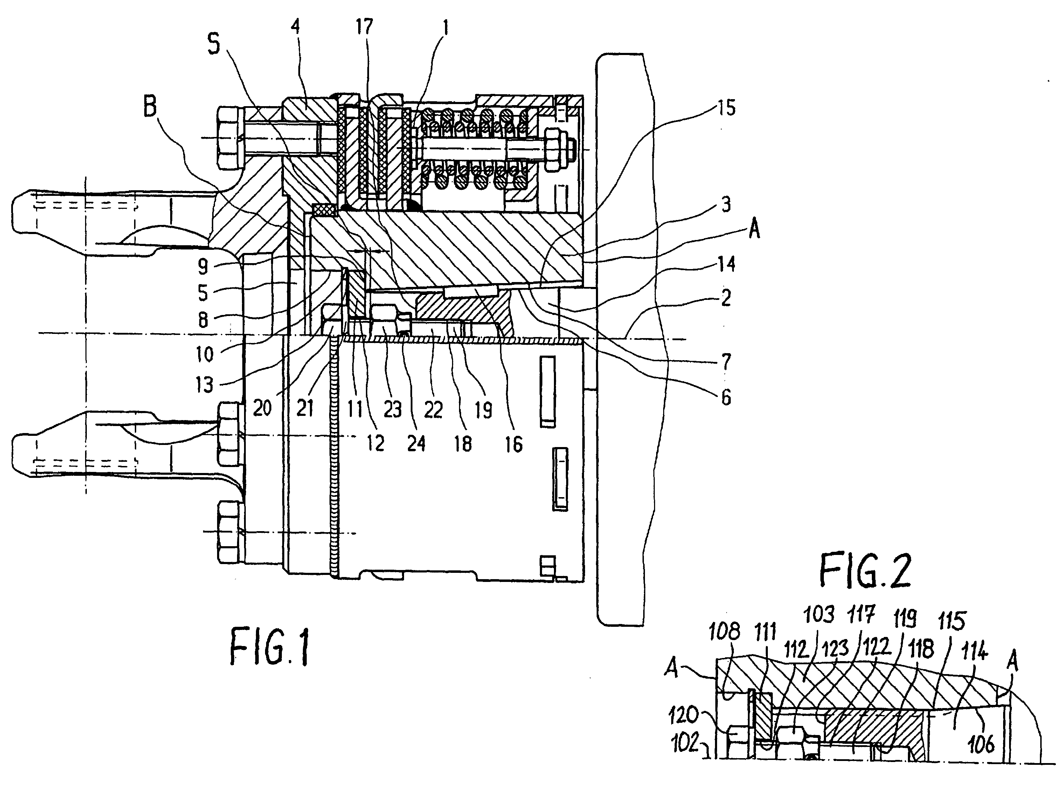

In Figur 1 ist eine Reibkupplung 1 dargestellt. Diese weist die Längsachse 2 auf, welche auch gleichzeitig die Drehachse darstellt. Die Reibkupplung 1 umfaßt die Nabe 3 und ein Gehäuse 4, das relativ zur Nabe um die Längsachse 2 drehbar ist. Zwischen beiden ist eine durch eine Federanordnung belastete Reibanordnung wirksam. In dem Gehäuse 4 ist eine auf der Längsachse 2 zentrierte Öffnung 5 vorgesehen. Die in dem Gehäuse 4 drehbar angeordnete Nabe 3 weist eine zentrale, durchgehende Bohrung auf, welche einen von der ersten Stirnfläche A der Nabe 3 ausgehenden ersten Bohrungsabschnitt 6 umfaßt, der sich in Richtung zur zweiten Stirnfläche B verjüngt, d. h. der erste Bohrungsabschnitt 6 ist konisch ausgebildet. Darüber hinaus ist in dem ersten Bohrungsabschnitt 6 eine Nut 7 vorhanden. In Richtung zur zweiten Stirnfläche B schließt sich an den ersten Bohrungsabschnitt 6, d. h. an dessen kleinsten Durchmesser, ein im Durchmesser vergrößerter zweiter Bohrungsabschnitt 8 an. Zwischen dem ersten Bohrungsabschnitt 6 und dem zweiten Bohrungsabschnitt 8 ist dadurch eine Stufenfläche 9 gebildet. Im axialen Abstand zur Stufenfläche 9 ist im zweiten Bohrungsabschnitt 8 eine umlaufende Sicherungsnut 10 vorhanden. Eine Stützscheibe 11, die eine auf der Längsachse 2 zentrierte Bohrung 12 aufweist, ist gegen die Stufenfläche 9 anliegend montiert und axial unverschieblich durch einen Sicherungsring 13 gehalten, der in die Sicherungsnut 10 eingreift. In dem ersten Bohrungsabschnitt 6 der Nabe 3 ist ausgehend von der ersten Stirnseite A eine Welle 14 mit ihrem Außenflächenabschnitt 15 eingesetzt. Der Außenflächenabschnitt 15 ist entsprechend dem ersten Bohrungsabschnitt 6 konisch gestaltet. Darüberhinaus ist im Außenflächenabschnitt 15 ein Keil 16 in eine Nut eingelassen. Er ist in Eingriff zur Nut 7 im ersten Bohrungsabschnitt 6 der Nabe 3. Von der Wellenstirnfläche 17 ausgehend, die sich in dem ersten Bohrungsabschnitt 6 befindet, ist eine Gewindebohrung 18 in die Welle 14 eingebracht. In die Gewindebohrung 18 ist eine Spannschraube 19 mit ihrem Gewindeschaft 22 einschraubbar. Diese Spannschraube 19 umfaßt ferner einen Kopf 20, der sich gegen die zur zweiten Stirnseite B hin liegende Seitenfläche der Stützscheibe 11 unter Zwischenschaltung eines Federrings 21 abstützt, wenn die Spannschraube 19 im Sinne des Einschraubens in die Gewindebohrung 18 hineingedreht wird. Auf den Gewindeschaft 22 ist eine Mutter 23 in Form einer Kronenmutter aufgeschraubt. Sie ist soweit von der der ersten Stirnseite A zugewandten Seitenfläche der Stützscheibe 11 weg angeordnet, daß beim Verspannen der Verbindung die Spannschraube 19 sicher mit dem Gewindeschaft 22 in die Gewindebohrung 18 eingeschraubt werden kann. Darüberhinaus ist die Mutter 23 mittels eines Splintes 24 an dem Gewindeschaft 22 festgelegt. Für das Lösen der Verbindung wird der Gewindeschaft 22 der Spannschraube 19 aus der Gewindebohrung 18 herausgeschraubt, so daß dabei der Kopf 20 zusammen mit der Mutter 23 sich von der Stirnfläche 8 entfernend bewegt wird, bis der Spalt S aufgebraucht ist und die Mutter 23 gegen die zur ersten Stirnfläche A hinweisende Seitenfläche der Stützscheibe 11 zur Anlage kommt. Beim weiteren Betätigen der Spannschraube 19 werden, da sich die Mutter 23 nicht auf dem Gewindeschaft 22 bewegen kann, die Nabe 3 und die Welle 14 relativ zueinander bewegt. Dabei entfernt sich die Wellenstirnfläche 17 von der Stützscheibe 11.

Es ist somit möglich, die Spannschraube 19, die ansonsten nur zur Verspannung der Welle-Nabe-Verbindung genutzt wird, hierdurch auch zuverlässig für das Lösen der Welle-Nabe-Verbindung zu verwenden.

Die Ausführungsform gemäß Figur 2 unterscheidet sich von der gemäß Figur 1 lediglich in der Ausbildung des ersten Bohrungsabschnitts 106 der Nabe 103 und der des Außenflächenabschnitts 115 der Welle 114. So ist der erste Bohrungsabschnitt 106 in zwei Abschnitte aufgeteilt. Ausgehend von der ersten Stirnseite A ist zunächst ein sich konisch verjüngender Abschnitt und daran anschließend bis zur zweiten Stirnfläche B ein mit einer Verzahnung mit zur Längsachse 102 parallelen Zähnen konstanter Zahnhöhe versehenen Abschnitt versehen. Der Außenflächenabschnitt 115 der Welle 114 ist entsprechend gegengleich gestaltet. Hinsichtlich der weiteren Einzelheiten sind keine Unterschiede zur Ausführung von Figur 1 gegeben, so daß zu deren Beschreibung auf die zu Figur 1 verwiesen wird. Zur Erleichterung wurden für Teile, die in Zusammenhang mit Figur 1 beschrieben wurden, Positionszahlen in Figur 2 gewählt, die zu denen der Figur 1 bei entsprechenden Teilen um den Zahlenwert 100 erhöht sind.

### Bezugszeichenliste

- 1: Reibkupplung
- 2, 102: Längsachse
- 3, 103: Nabe
- 4: Gehäuse
- 5: Öffnung
- 6, 106: erster Bohrungsabschnitt
- 7: Nut
- 8, 108: zweiter Bohrungsabschnitt
- 9: Stufenfläche
- 10: Sicherungsnut
- 11, 111: Stützscheibe
- 12, 112: Bohrung
- 13: Sicherungsring
- 14, 114: Welle
- 15, 115: Außenflächenabschnitt
- 16: Keil
- 17, 117: Wellenstirnfläche
- 18, 118: Gewindebohrung
- 19, 119: Spannschraube
- 20, 120: Kopf
- 21: Federring
- 22, 122: Gewindeschaft
- 23: Mutter / Kronenmutter
- 24: Splint
- 25: verzahnter Abschnitt
- A: erste Stirnfläche
- B: zweite Stirnfläche
- S: Spalt

## Patentansprüche

1. Welle-Nabe-Verbindung umfassend
- eine Nabe (3, 103)
mit einer ersten Stirnfläche (A) und einer dazu parallel angeordneten zweiten Stirnfläche (B),
mit einer sich zwischen den beiden Stirnflächen (A, B) erstreckenden und auf einer Längsachse (2, 102) zentrierten Durchgangsbohrung, die einen ersten Bohrungsabschnitt (6) aufweist,
- eine Stützscheibe (11, 111) mit einer durchgehenden Bohrung (12, 112), die an der Nabe (3, 103) an dem der zweiten Stirnfläche (B) nahen Ende des ersten Bohrungsabschnitts (6) entlang der Längsachse (2) unbeweglich gehalten ist,
- eine Welle (14, 114)
mit einem Außenflächenabschnitt (15, 115), der zum ersten Bohrungsabschnitt (6, 106) der Nabe (3, 103) passend ausgebildet ist und auf der Längsachse (2, 102) zentriert ist, und
mit einer von einer Wellenstirnfläche (17, 117) ausgehenden und auf der Längsachse (2, 102) zentrierten Gewindebohrung (18, 118) und
- eine Spannschraube (19, 119)
mit einem Kopf (20, 120) und einem Gewindeschaft (22, 122), welcher von der zweiten Stirnfläche (B) der Nabe (3, 103) ausgehend durch die Bohrung (12, 112) der Stützscheibe (11, 111) in die Gewindebohrung (18, 118) einschraubbar ist, und
wobei der erste Bohrungsabschnitt (6, 106) der Nabe (3, 103) und der darin aufnehmbare Außenflächenabschnitt (15, 115) der Welle (14, 114) so ausgebildet sind, daß zumindest ab einer bestimmten Eintauchtiefe der Welle (14, 114) in den ersten Bohrungsabschnitt (6, 106) ein dem Verspannen beider zueinander entgegenwirkender Reibwiderstand aufbaubar und/oder entgegenwirkender Formwiderstand vorhanden ist,
**dadurch gekennzeichnet,**
**daß** eine Mutter (23, 123) zwischen der Stützscheibe (11, 111) und der Wellenstirnfläche (17, 117) mit Spiel zur Stützscheibe (11, 111) auf dem Gewindeschaft (22, 122) der Spannschraube (19, 119) undrehbar festgelegt ist.

2. Welle-Nabe-Verbindung nach Anspruch 1,
**dadurch gekennzeichnet,**
**daß** die Nabe (3, 103) einen von der zweiten Stirnfläche (B) ausgehenden und zum ersten Bohrungsabschnitt (6, 106) durchmessermäßig vergrößerten zweiten Bohrungsabschnitt (8, 108) aufweist, so daß zwischen beiden Bohrungsabschnitten (6, 8; 106, 108) eine Stufenfläche (9) gegeben ist, und
**daß** die Stützscheibe (11, 111) im zweiten Bohrungsabschnitt (8, 108) einsitzt, gegen die Stufenfläche (9) anliegt und durch Sicherungsmittel (13) gehalten ist.

3. Welle-Nabe-Verbindung nach Anspruch 2,
**dadurch gekennzeichnet,**
**daß** die Sicherungsmittel durch einen Sicherungsring (13) dargestellt sind, der in einer Sicherungsnut (10) im zweiten Bohrungsabschnitt (8, 108) der Nabe (3) gehalten ist.

4. Welle-Nabe-Verbindung nach Anspruch 1,
**dadurch gekennzeichnet,**
**daß** die Mutter (23, 123) als Kronenmutter ausgebildet und durch einen Splint (24) auf dem Gewindeschaft (22, 122) gegen Verlagerung gesichert ist.

5. Welle-Nabe-Verbindung nach Anspruch 1,
**dadurch gekennzeichnet,**
**daß** der erste Bohrungsabschnitt (6, 106) der Nabe (3, 103) sich in Richtung zur zweiten Stirnfläche (B) hin konisch verjüngt und der Außenflächenabschnitt (15, 115) der Welle (14, 114) entsprechend konisch ausgebildet ist.

6. Welle-Nabe-Verbindung nach Anspruch 1,
**dadurch gekennzeichnet,**
**daß** der erste Bohrungsabschnitt (106) einen zur zweiten Stützfläche (B) hin sich konisch verjüngenden Abschnitt und daran anschließend einen bis zur ersten Stirnfläche (A) reichenden verzahnten Abschnitt (25) mit zur Längsachse (102) parallelen Zähnen konstanter Zahnhöhe aufweist und der Außenflächenabschnitt (115) der Welle (114) zu diesen passende Abschnitte aufweist.

7. Welle-Nabe-Verbindung nach einem der Ansprüche 1 bis 6,
**dadurch gekennzeichnet,**
**daß** die Nabe (3, 103) Bestandteil einer Kupplung ist und die Welle (14, 114) einen Teil einer Antriebswelle darstellt.

## Claims

1. Shaft-hub-connection comprising
- a hub (3, 103)
with a first end face (A) and a second end face (B) arranged parallel thereto,
with a through bore, extending between the two end faces (A, B) and centred on a longitudinal axis (2, 102) and having a first bore portion (6),
- a support disc (11, 111) with a through bore (12, 112), retained unmovable along the longitudinal axis (2) on the hub (3, 103) at the end of the first bore portion (6), which end is arranged close to the second end face (B),
- a shaft (14, 114)
with an outer face portion (15, 115), formed to fit to the first bore portion (6, 106) of the hub (3, 103) and centred on the longitudinal axis (2, 102), and
with a threaded bore (18, 118) starting from a shaft end face (17, 117) and centred on the longitudinal axis (2, 102) and
- a tensioning screw (19, 119)
with a head (20, 120) and a threaded shaft (22, 122), which, starting from the second end face (B) of the hub (3, 103) and through the bore (12, 112) of the support disc (11, 111), can be screwed into the threaded bore (18, 118), and
wherein the first bore portion (6, 106) of the hub (3, 103) and the outer face portion (15, 115) of the shaft (14, 114), receivable therein, are formed in such a way, that at least from a determined insertion depth of the shaft (14, 114) into the first bore portion (6, 106) an against to the tensioning of the two against each other acting frictional resistance and/or resistance in shape are present,
**characterised in that**
a nut (23, 123) is non-rotationally fixed between the support disc (11, 111) and the shaft end face (17, 117) on the threaded shaft (22, 122) of the tensioning screw (19, 119) with a gap towards the support disc (11, 111).

2. Shaft-hub-connection according to claim 1,
**characterised in that**
the hub (3, 103) has a second bore portion (8, 108) starting from the second end face (B) and enlarged in diameter compared to the first bore portion (6, 106), so that between the two bore portions (6, 8; 106, 108) a step face (9) is provided, and **in that** the support disc (11, 111) rests in the second bore portion (8, 108), abuts the step face (9) and is held by securing means (13).

3. Shaft-hub-connection according to claim 2,
**characterised in that**
the securing means are represented by a securing ring (13) retained in a securing groove (10) in the second bore portion (8, 108) of the hub (3).

4. Shaft-hub-connection according to claim 1,
**characterised in that**
the nut (23, 123) is formed as a castle nut and is secured against displacement by means of a peg (24) on the threaded shaft (22, 122).

5. Shaft-hub-connection according to claim 1,
**characterised in that**
the first bore portion (6, 106) of the hub (3, 103) is conically reduced in the direction towards the second end face (B) and that the outer face portion (15, 115) of the shaft (14, 114) is formed correspondingly conical.

6. Shaft-hub-connection according to claim 1,
**characterised in that**
the first bore portion (106) has a portion conically tapered towards the second support face (B) and a toothed portion (25) continuous to the first bore portion (106) and extending towards the first end face (A) and having teeth of constant teeth height arranged parallel to the longitudinal axis (102) and **in that** the outer face portion (115) of the shaft (114) has portions fitting thereto.

7. Shaft-hub-connection according to one of claims 1 to 6,
**characterised in that**
the hub (3, 103) forms part of a coupling and the shaft (14, 114) forms part of a driving shaft.

## Revendications

1. Jonction arbre-moyeu, comprenant :
-- un moyeu (3, 103)
avec une première surface frontale (A) et une seconde surface frontale (B) agencée parallèlement à celle-ci,
avec un perçage traversant, s'étendant entre les deux surfaces frontales (A, B) et centré sur un axe longitudinal (2, 102), qui présente un premier tronçon de perçage (6),
-- un disque de soutien (11, 111) avec un perçage traversant (12, 112), qui est maintenu sur le moyeu (3, 103) à l'extrémité du premier tronçon de moyeu (6) proche de la seconde surface frontale (B) sans possibilité de déplacement le long de l'axe longitudinal (2),
-- un arbre (14,114)
avec un tronçon de surface extérieure (15, 115) qui est réalisé de façon ajustée au premier tronçon de perçage (6, 106) du moyeu (3, 103) et qui est centré sur l'axe longitudinal (2, 102), et
avec un perçage taraudé (18, 118) qui part de l'une des surfaces frontales (17, 117) de l'arbre et qui est centré sur l'axe longitudinal (2, 102), et
-- une vis de serrage (19, 119) avec une tête (20, 120) et avec un fût fileté (22, 122), laquelle est susceptible d'être vissée, en partant de la seconde surface frontale (B) du moyeu (3, 103) à travers le perçage (12, 112) du disque de soutien (11, 111) jusque dans le perçage taraudé (18, 118), et
dans laquelle le premier tronçon de perçage (6, 106) du moyeu (3, 103) et le tronçon de surface extérieure (15, 115) de l'arbre (14, 114) susceptible d'être reçu dans ce tronçon de perçage sont ainsi réalisés que, au moins à partir d'une certaine profondeur de pénétration de l'arbre (14, 114) dans le premier tronçon de perçage (6, 106), une résistance de friction qui s'oppose au serrage de ces deux éléments l'un par rapport à l'autre est susceptible de s'annuler et/ou il existe une résistance de forme à action opposée,
**caractérisée en ce qu'**il est prévu un écrou (23, 123) entre le disque de soutien (11, 111) et la surface frontale (17, 117) de l'arbre, immobilisé avec jeu par rapport au disque de soutien (11, 111), sans faculté de rotation sur le fût fileté (22, 122) de la vis de serrage (19, 119).

2. Jonction arbre-moyeu selon la revendication 1, **caractérisée en ce que** le moyeu (3, 103) comporte un second tronçon de perçage (8, 108) dont le diamètre est agrandi par rapport au premier tronçon de perçage (6, 106), de sorte qu'il se présente entre ces deux tronçons de perçage (6, 8 ; 106, 108) une surface en gradin (9), et **en ce que** le disque de soutien (11, 111) est logé dans le second tronçon de perçage (8, 108), est appliqué contre la surface en gradin (9), et est maintenu par des moyens de blocage (13).

3. Jonction arbre-moyeu selon la revendication 2, **caractérisée en ce que** les moyens de blocage sont représentés par une bague de blocage (13) qui est maintenue dans une gorge de blocage (10) dans le second tronçon de perçage (8, 108) du moyeu (3).

4. Jonction arbre-moyeu selon la revendication 1, **caractérisée en ce que** l'écrou (23, 123) est réalisé sous la forme d'un écrou à couronne, et **en ce qu'**il est bloqué à l'encontre d'un déplacement au moyen d'une goupille (24) sur le fût fileté (22, 122).

5. Jonction arbre-moyeu selon la revendication 1, **caractérisée en ce que** le premier tronçon de perçage (6, 106) du moyeu (3, 103) se rétrécit de manière conique en direction de la seconde surface frontale (B), et **en ce que** le tronçon de surface extérieure (15, 115) de l'arbre (14, 114) est réalisé avec une forme conique correspondante.

6. Jonction arbre-moyeu selon la revendication 1, **caractérisée en ce que** le premier tronçon de perçage (106) comprend un tronçon qui se rétrécit de manière conique en direction de la seconde surface de soutien (B), et à la suite de celui-ci un tronçon denté (25) qui va jusqu'à la première surface frontale (A), avec des dents de hauteur constante parallèles à l'axe longitudinal (102), et **en ce que** le tronçon de surface extérieure (115) de l'arbre (114) comporte des tronçons ajustés à celles-ci.

7. Jonction arbre-moyeu selon l'une des revendications 1 à 6, **caractérisée en ce que** le moyeu (3, 103) fait partie d'un embrayage, et **en ce que** l'arbre (14, 114) représente une partie d'un arbre d'entraînement.
